(19) Europäisches Patentamt
European Patent Office
Office européen des brevets

(11) **EP 2 580 042 B1**

(12) **EUROPÄISCHE PATENTSCHRIFT**

(45) Veröffentlichungstag und Bekanntmachung des Hinweises auf die Patenterteilung:
**30.07.2014 Patentblatt 2014/31**

(51) Int Cl.:
***B29C 47/38*** *(2006.01)*     ***B29B 7/48*** *(2006.01)*

(21) Anmeldenummer: **10732245.5**

(22) Anmeldetag: **09.06.2010**

(86) Internationale Anmeldenummer:
**PCT/AT2010/000204**

(87) Internationale Veröffentlichungsnummer:
**WO 2011/153557 (15.12.2011 Gazette 2011/50)**

(54) **VORRICHTUNG ZUR VERARBEITUNG VON MATERIAL DURCH MISCHUNG UND/ODER PLASTIFIZIERUNG**

DEVICE FOR PROCESSING MATERIAL BY MIXING AND/OR PLASTICATING

DISPOSITIF DE FAÇONNAGE DE MATÉRIAU PAR MÉLANGE ET/OU PLASTIFICATION

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**17.04.2013 Patentblatt 2013/16**

(73) Patentinhaber: **Schulz, Helmuth**
**4020 Linz (AT)**

(72) Erfinder: **Schulz, Helmuth**
**4020 Linz (AT)**

(74) Vertreter: **Hübscher, Helmut et al**
**Patentanwaltskanzlei Hübscher**
**Postfach 411**
**4010 Linz (AT)**

(56) Entgegenhaltungen:
**DE-C- 846 012        JP-A- 55 051 543**
**JP-A- 2002 355 879   US-A- 3 288 077**
**US-A- 4 247 206**

**Beschreibung**

Technisches Gebiet

Die Erfindung betrifft eine Vorrichtung zur Verarbeitung von Material durch Mischung und/oder Plastifizierung, mit zumindest zwei nebeneinander in einem gemeinsamen Schneckengehäuse angeordneten konischen Schnecken, deren Schneckengänge miteinander in Eingriff stehen und zum Umlauf um die jeweilige Schneckenachse durch zumindest einen Motor mit gleicher Umlaufrichtung angetrieben sind, wobei das zu verarbeitende Material den Schnecken durch zumindest eine im Einzugsbereich des einen Stirnendes der Schnecken angeordnete Einzugsöffnung des Schneckengehäuses zugeführt wird und das von den Schnecken verarbeitete Material das Schneckengehäuse durch zumindest eine im Abgabebereich des anderen Stirnendes der Schnecken angeordnete Austrittsöffnung des Schneckengehäuses verlässt.

Stand der Technik

Derartige Vorrichtungen eignen sich insbesondere auch zur Aufbereitung von zum Recycling vorgesehenen Kunststoffabfällen. Häufig werden solche Doppelschneckenextruder zur Mischung unterschiedlicher Polyolifinarten bzw. zur Compoundierung von Kunststoffen unterschiedlichster Arten verwendet. Üblicherweise liegen diese Materialien als loses Schüttgut vor, dessen spezifisches Gewicht vergleichsweise gering ist, was wiederum zur Folge hat, dass zur Erzielung eines ausreichenden Durchsatzes große Mengen an zu verarbeitenden Material im Einzugsbereich der Schnecken aufgenommen werden müssen. Diese Materialmengen haben dann im Verlauf des durch die Schnecken zu erfolgenden Transportes und durch die dort erfolgende Aufschmelzung, Entgasung und Verdichtung von der Einzugsöffnung zur Austrittsöffnung auf das gewünschte Maß plastifiziert bzw. homogenisiert zu werden, um im Bereich der Austrittsöffnung eine gewünschten Materialqualität zu erhalten. Durch die Wahl einer geeigneten Geometrie der Schneckengänge, lässt sich dieses Problem zu einem gewissen Grad bewältigen. Jedoch steht dem entgegen, dass die Verhältnisse beim zu verarbeitenden Kunststoffmaterial nicht immer gleich sind, insbesondere was die Größe der zu verarbeitenden Materialien betrifft, aber auch deren Materialart, Verschmutzungsgrad und dgl. Auch diesbezüglich hat sich die Verwendung bekannter Doppelschneckenextruder als nicht völlig befriedigend erwiesen.

Um bei derartigen aus der DE 15 29 812 A1 bekannten Vorrichtungen das Mischungsverhältnis weiter zu verbessern ist es bekannt (AT 503 371 A), die beiden Schnecken als Bestandteile eines Doppelschneckenextruders mit konischen Schnecken auszubilden, die mit gleicher Umlaufrichtung angetrieben sind, wobei den Drehgeschwindigkeiten der Schnecken Oberwellen aufgeprägt sind. Derartige Extruder eignen sich gut zur Aufbereitung von Recyclingmaterialien und es ergibt sich eine Verbesserung hinsichtlich der Durchmischung und Aufbereitung des Materials. Allerdings besitzen diese bekannten Extruder eine nicht überzeugende Förderleistung.

Zur Vergleichmäßigung der Förderleistung bei Schnecken mit gleicher Umlaufrichtung wurde bereits vorgeschlagen, die Schnecken mit einem exzentrischen Kern auszustatten (US 3 288 077 A). Konische gegenläufige Schnecken sind aus der US 4 247 206 A bekannt.

Darstellung der Erfindung

Ausgehend von einem Stand der Technik der eingangs geschilderten Art liegt der Erfindung die Aufgabe zugrunde, eine Vorrichtung zur Aufbereitung von Kunststoffen zu schaffen, welche bei einer verbesserten Förderleistung für eine gute Durchmischung und Homogenisierung des Kunststoffes sorgt.

Die Erfindung löst diese Aufgabe dadurch, dass das Verhältnis der Zahlenwerte von Schneckenaußendurchmesser zu Überdeckung, also zur Überlappungsfläche beider Schnecken, sowohl im Einzugsbereich als auch im Abgabebereich im Bereich zwischen eins zu eins und eins zu zwei ist.

Überrascherweise hat sich gezeigt, dass sich beim Vorsehen der erfindungsgemäßen Verhältnisse, insbesondere in Abhängigkeit der Überlappungsflächen beider Flächen im Einzugsbereich einerseits als auch im Abgabebereich andererseits, dann verbesserte Verhältnisse für die Förderwirkung ergeben, wenn das Verhältnis der Zahlenwerte von Schneckenaußendurchmesser zu Überdeckung im Bereich von eins zu eins und eins zu zwei ist. Überraschenderweise hat sich herausgestellt, dass mit derartigen Vorrichtungen massiv höhere Drehgeschwindigkeiten für die Extruderschnecken realisiert werden können und ein gegenüber bekannten Vorrichtungen viel geringerer Verschleiß auftritt. Die verringerte Verschleißwirkung ergibt sich durch die gegenüber gegenläufigen Schnecken erheblich verringerten Spreizkräfte, da der aufzuschmelzende Kunststoff praktisch um beide Förderschnecken umlaufend gefördert wird und somit keine, die Verschleißkräfte bewirkenden Scherkräfte bzw. Spreizkräfte entstehen, welche die Extruderschnecken gegen die Gehäusemantelfläche andrücken. Durch diese Verhältnisse ergibt sich zudem eine insgesamt verbesserte Durchmischung der Kunststoffschmelze. Von Vorteil ist es dabei insbesondere, wenn das Verhältnis von Schneckendurchmesser zu Überdeckung, also zur Überlappungsfläche beider Schnecken vom Einzugsbereich bis zum Abgabebereich, also über die gesamte Eingriffslänge beider Schnecken, zumindest annähernd gleich ist.

Erfindungsgemäße Vorrichtungen besitzen bei gleicher Größe eine erheblich verbesserte Durchsatzrate, im Vergleich zum Stand der Technik. Die konischen, gleichlaufenden Extruderschnecken weisen in üblicher Weise verschiedene Zonen auf, insbesondere eine Einzugszone, eine Aufschmelzzone, einen Mischer, eine Entgasung und eine, eine einen entsprechenden Staudruck aufbauende und die Schmelze homogenisierende Förderzone zum Ausbringen des aufgeschmolzen Kunststoffes aus der Vorrichtung. Um verschiedenste Zusammensetzungen von aufzuschmelzendem Kunststoffgranulat, insbesondere Kunststoffgranulat mit geringem und mit höherem Schüttgewicht gleichermaßen mit der Vorrichtung aufschmelzen zu können, empfiehlt es sich, wenn das Verhältnis von der zumindest annähernd der Schneckengangtiefe einer Schnecke entsprechenden maximalen Überdeckungshöhe im Abgabebereich zur Überdeckungshöhe im Einzugsbereich im Bereich zwischen eins zu eins und eins zu vier ist.

Gleichermaßen kann die Konizität der Schnecke entsprechend angepasst werden, wobei das Verhältnis vom Schneckenaußendurchmesser in Abgabebereich zum Schneckenaußendurchmesser im Einzugsbereich vorzugsweise im Bereich zwischen eins zu eins und eins zu vier ist.

Für das Verhältnis vom Schneckenaußendurchmesser im Abgabebereich zur Schneckenlänge empfiehlt es sich, wenn dieses Verhältnis im Bereich zwischen eins zu zwanzig und eins zu fünfzig liegt.

Besonders vorteilhafte Verhältnisse ergeben sich, wenn die konischen Schnecken in Schneckenlängsrichtung wenigstens drei vorzugsweise fünf Abschnitte umfasst, von denen die einander anschließenden Abschnitte unterschiedliche Verzahnungen bzw. Verzahnungsgeometrien aufweisen.

Um die verschiedenen Bearbeitungszonen sauber voneinander trennen zu können bzw. zur Verbesserung der Qualität des zu fertigenden Kunststoffes können die aneinander anschließenden Abschnitte eine zumindest annähernd gleiche Verzahnung (hinsichtlich des moduls) aufweisen, wobei allerdings diese einander anschließenden Schneckenabschnitte vorzugsweise eine unterschiedliche Gangzahl aufweisen. Die Abschnitte geringerer Gangzahl wirken in diesem Fall als Durchflussdrosseln bzw. als Bremsen und sorgen somit dafür, dass stets eine erforderliche Mindestverweildauer des aufzubereitenden Kunststoffes in den vorgesehenen Bearbeitungsabschnitten gewährleistet ist. Ist der eine Bearbeitungsabschnitt beispielsweise zweigängig und der daran anschließende Bearbeitungsabschnitt eingängig ausgestaltet, so empfiehlt es sich, wenn der zwischen zwei Schneckenabschnitten mit zumindest annähernd gleicher Verzahnungsgeometrie vorgesehene Schneckenabschnitt eine 1,5 bis 2,5 fache, vorzugsweise 2 fache Zahnkopf- und Zahnfußbreite aufweist. Die einzelnen Verzahnungsabschnitte können in üblicher Weise gesondert gefertigt und gegebenenfalls unter Zwischenlage von Abstandsscheiben miteinander verschraubt werden.

Eine besonders bevorzugte Ausgestaltungsvariante eines erfindungsgemäßen Extruders zeichnet sich dadurch aus, dass der erste Schneckenabschnitt den Einzugs- und Aufschmelzbereich, der dritte Schneckenabschnitt den Entgasungsbereich und der fünfte Schneckenabschnitt den zum Austragsbereich weisenden Homogenisierungs- und Austragsbereich eines Extruders bildet und dass der zweite und vierte Schneckenabschnitt die Drosseln bzw. insbesondere Dichtungsbereiche darstellen, die beispielsweise dadurch gebildet werden, dass eben diese Drosseln bzw. Dichtungsbereiche gegenüber den anderen Abschnitten mit einer geringeren Gangzahl ausgestattet sind. Des Weiteren kann zwischen den einzelnen Abschnitten eine gesonderte Mischeinheit mit, beispielsweise einer Form von elliptisch ausgebildeten Flügelrädern vorgesehen sein.

Kurze Beschreibung der Zeichnung

In der Zeichnung ist die Erfindung anhand eines Ausführungsbeispieles schematisch dargestellt. Es zeigen

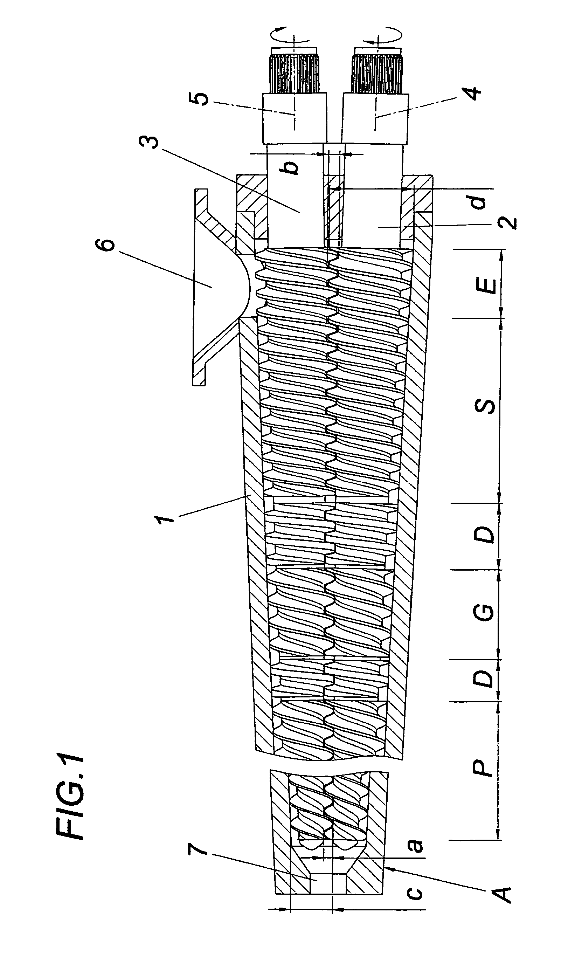

Fig. 1    eine erfindungsgemäße Vorrichtung im teilgeschnittenen Längsschnitt,

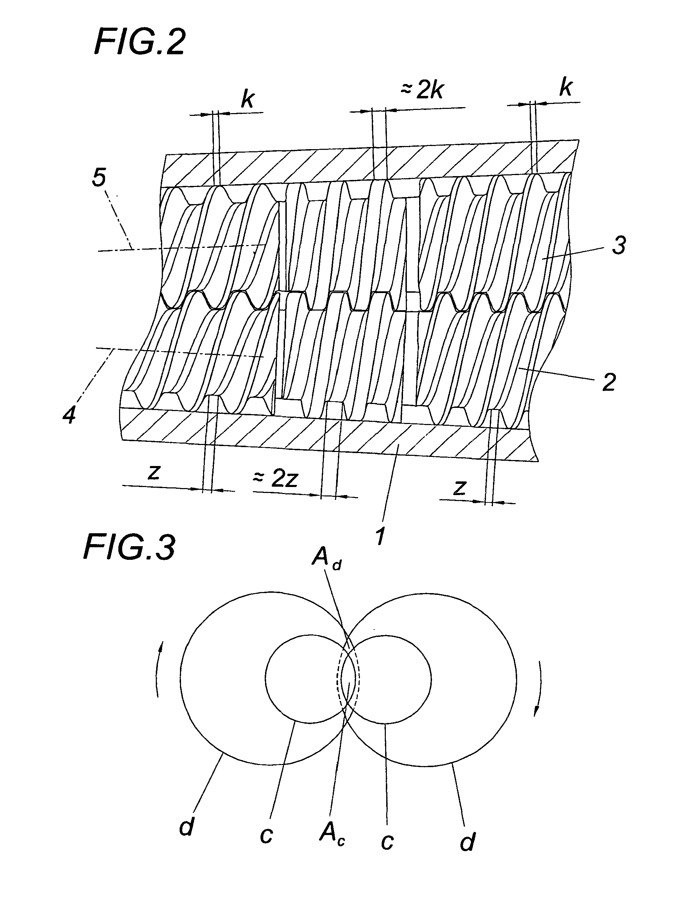

Fig. 2    einen vergrößerten Ausschnitt der Vorrichtung aus Fig. 1 in vergrößertem Maßstab und

Fig. 3    eine schematische Darstellung des Verhältnisses vom Schneckendurchmesser zur Überdeckung, also zur Überlappungsfläche beider Schnecken, sowohl im Einzugsbereich als auch im Abgabebereich.

Weg zur Ausführung der Erfindung

Eine Vorrichtung zur Verarbeitung von Material, insbesondere von Kunststoffgranulat, durch Mischung und/oder Plastifizierung umfasst zwei nebeneinander in einem gemeinsamen Schneckengehäuse 1 angeordnete konische Schnecken 2, 3, deren Schneckengänge miteinander im Eingriff stehen und zum Umlauf um die jeweilige Schneckenachse 4, 5 durch zumindest einen nicht näher dargestellten Motor mit gleicher Umlaufrichtung angetrieben sind, wobei das zu verarbeitende Material den Schnecken 2, 3 durch eine im Einzugsbereich E des einen Stirnendes der Schnecken 2, 3 angeordnete Einzugsöffnung 6 des Schneckengehäuses 1 zugeführt wird und das von den Schnecken 2, 3 verarbeitete Material das Schneckengehäuse 1 durch zumindest einen Abgabebereich A des anderen Stirnendes der Schnecken 4, 5 angeordnete Austrittsöffnung 7 des Schneckengehäuses 1 verlässt.

Die dargestellte Vorrichtung umfasst konische Schnecken 2, 3, die in Schneckenlängsrichtung fünf Abschnitte umfassen, von denen die aneinander anschließenden Abschnitte verschiedene Verzahnungen aufweisen. Insbesondere weisen die aneinander anschließenden Schneckenabschnitte eine zumindest annähernd gleiche Verzahnungsgeometrie auf, allerdings besitzen diese Schneckenabschnitte eine unterschiedliche Gangzahl, die sich im dargestellten Ausführungsbeispiel um den Faktor 1 unterscheidet. Deshalb weist der zwischen zwei zweigängigen Schneckenabschnitten vorgesehene eingängige Schneckenabschnitt insbesondere eine 1,5 bis 2,5 fache Zahnkopf- und Zahnfußbreite (k, z) auf.

Im dargestellten Ausführungsbeispiel bildet der erste Schneckenabschnitt den Einzugs- und Aufschmelzbereich E, S, der dritte Schneckenabschnitt den Entgasungsabschnitt G und der fünfte Schneckenabschnitt den zum Austragsbereich weisenden Homogenisierungs- und Pumpbereich P aus und stellen der zweite und vierte Schneckenabschnitt eingängige Dichtungsbereiche D dar.

Das Verhältnis der Zahlenwerte von Schneckenaußendurchmesser c, d zu Überdeckung, also zur Überlappungsfläche beider Schnecken 2, 3, sowohl im Einzugsbereich E als auch im Abgabebereich A ist im Bereich zwischen eins zu eins und eins zu zwei. Das Verhältnis von der zumindest annähernd der Schneckengangtiefe einer Schnecke 3, 4 entsprechend maximalen Überdeckungshöhe a im Abgabebereich A zur Überdeckungshöhe b im Einzugsbereich E liegt im Bereich zwischen eins zu eins und eins zu vier. Da das Spiel zwischen den einzelnen Schnecken üblicherweise minimal sein soll, ist dieser Abstand hier nicht berücksichtigt. Das Verhältnis von Schneckenaußendurchmesser c im Abgabebereich zum Schneckenaußendurchmesser d im Einzugsbereich liegt im Bereich zwischen eins zu eins und eins zu vier. Das Verhältnis von Schneckenaußendurchmesser c im Abgabebereich zur Schneckenlänge E ist im Bereich zwischen eins zu eins und eins zu zwanzig.

$d/A_d$ = 1:1 - 1:2 (Durchmesser/Überdeckungsfläche im Einzugsbereich E)
$c/A_c$ = 1:1 - 1:2 (Durchmesser/Überdeckungsfläche im Abgabebereich A)
a/b = 1:1 - 1:4 (Schneckengangtiefe)
c/d = 1:1 - 1:4 (Schneckenaußendurchmesser)
c/Schneckenlänge = 1:20 - 1:50

und vorzugsweise $d/A_d = c/A_c$.

Die Überdeckungsfläche A kann nach folgender Formel errechnet werden:

$$A = \left[ d^2 \pi \left[ \frac{\tan^{-1}\left[ 2\frac{\sqrt{\left(\frac{d}{2}\right)^2 - \left(\frac{x}{2}\right)^2}}{x} \right]}{360} \right] \right] - \left[ 2\sqrt{\left(\frac{d}{2}\right)^2 - \left(\frac{x}{2}\right)^2} \right] * \left[ \frac{d}{2} - \frac{1}{2}(d-x) \right]$$

wobei d der Außendurchmesser der Schnecken und x der Abstand der Schneckenachsen auf Höhe der zu berechnenden Überdeckungsfläche ist.

## Patentansprüche

1. Vorrichtung zur Verarbeitung von Material durch Mischung und/oder Plastifizierung, mit zumindest zwei nebeneinander in einem gemeinsamen Schneckengehäuse (1) angeordneten konischen Schnecken (2, 3), deren Schneckengänge miteinander in Eingriff stehen und zum Umlauf um die jeweilige Schneckenachse (4, 5) durch zumindest einen Motor mit gleicher Umlaufrichtung angetrieben sind, wobei das zu verarbeitende Material den Schnecken (2, 3) durch zumindest eine im Einzugsbereich (E) des einen Stirnendes der Schnecken (4, 5) angeordnete Einzugsöffnung (6) des Schneckengehäuses (1) zugeführt wird und das von den Schnecken (2, 3) verarbeitete Material das Schneckengehäuse (1) durch zumindest eine im Abgabebereich (A) des anderen Stirnendes der Schnecken (2, 3)angeordnete Austrittsöffnung (7) des Schneckengehäuses (1) verlässt, **dadurch gekennzeichnet, dass** das Verhältnis der Zahlenwerte von Schneckenaußendurchmesser (c, d) zu Überdeckung, also zur Überlappungsfläche beider Schnecken (2, 3), sowohl im Einzugsbereich (E) als auch im Abgabebereich (A) im Bereich zwischen eins zu eins und eins zu zwei ist.

2. Vorrichtung nach Anspruch 1, **dadurch gekennzeichnet, dass** das Verhältnis von der zumindest annähernd der Schneckengangtiefe einer Schnecke (2, 3) entsprechenden maximale Überdeckungshöhe (a) im Abgabebereich zur Überdeckungshöhe (b) im Einzugsbereich im Bereich zwischen eins zu eins und eins zu vier ist.

3. Vorrichtung nach Anspruch 1 oder 2, **dadurch gekennzeichnet, dass** das Verhältnis vom Schneckenaußendurchmesser (c) im Abgabebereich zum Schneckenaußendurchmesser (d) im Einzugsbereich im Bereich zwischen eins zu eins und eins zu vier ist.

4. Vorrichtung nach einem der Ansprüche 1 bis 3, **dadurch gekennzeichnet, dass** das Verhältnis vom Schneckenaußendurchmesser (c) im Abgabebereich zur Schneckenlänge (e) im Bereich zwischen eins zu zwanzig und eins zu fünfzig ist.

5. Vorrichtung nach einem der Ansprüche 1 bis 4, **dadurch gekennzeichnet, dass** die konischen Schnecken (2, 3) in Schneckenlängsrichtung wenigstens drei, vorzugsweise fünf, Abschnitte umfasst, von denen die aneinander anschließenden Abschnitte verschiedene Verzahnungen aufweisen.

6. Vorrichtung nach Anspruch 5, **dadurch gekennzeichnet, dass** die aneinander anschließenden Schneckenabschnitte eine zumindest annähernd gleiche Verzahnungsgeometrie aufweisen, allerdings eine verschiedene Gangzahl aufweisen.

7. Vorrichtung nach Anspruch 5 oder 6, **dadurch gekennzeichnet, dass** der zwischen zwei Schneckenabschnitten mit zumindest annähernd gleicher Verzahnungsgeometrie vorgesehene Schneckenabschnitt eine 1,5 bis 2,5-fache, vorzugsweise zweifache, Zahnkopf- (k) und Zahnfußbreite (z) aufweist.

8. Vorrichtung nach einem der Ansprüche 1 bis 7, **dadurch gekennzeichnet, dass** der erste Schneckenabschnitt den Aufschmelzbereich (S, E), der dritte Schneckenabschnitt den Entgasungsbereich (G) und der fünfte Schneckenabschnitt den zum Austragsbereich weisenden homogenisierungsbereich (P) eines Extruders bilden und dass der zweite und vierte Schneckenabschnitt Dichtungsbereiche (D) bilden.

**Claims**

1. Device for processing material by mixing and/or plasticising, comprising at least two conical screws (2, 3) which are arranged next to each other in a common screw casing (1) and the flights of which engage with one another and are driven to rotate about the respective screw axis (4, 5) by at least one motor with the same direction of rotation, the material which is to be processed being fed to the screws (2, 3) through at least one feed opening (6) in the screw casing (1) which is arranged in the feed zone (E) of one end face of the screws (2, 3), and the material which has been processed by the screws (2, 3) leaving the screw casing (1) through at least one outlet opening (7) in the screw casing (1) which is arranged in the discharge zone (A) of the other end face of the screws (2, 3), **characterised in that** the ratio of the numerical values of the screw outside diameter (c, d) to the profile overlap, i.e., to the overlapping area of the two screws (2, 3), both in the feed zone (E) and in the discharge zone (A) is in the range of between one to one and one to two.

2. Device as claimed in claim 1, **characterised in that** the ratio of the maximum extent of profile overlap (a) in the discharge zone to the extent of profile overlap (b) in the feed zone is in the range of between one to one and one to four, said maximum extent of profile overlap (a) corresponding at least approximately to the flight depth of a screw.

3. Device as claimed in claim 1 or 2, **characterised in that** the ratio of the screw outside diameter (c) in the discharge zone to the screw outside diameter (d) in the feed zone is in the range of between one to one and one to four.

4. Device as claimed in any one of claims 1 to 3, **characterised in that** the ratio of the screw outside diameter (c) in the discharge zone to the screw length (e) is in the range of between one to twenty and one to fifty.

**5.** Device as claimed in any one of claims 1 to 4, **characterised in that** the conical screws (2, 3) comprise at least three, preferably five, portions in the longitudinal direction of the screw, of which the mutually adjacent portions have different toothed arrangements.

**6.** Device as claimed in claim 5, **characterised in that** the mutually adjacent screw portions have an at least approximately identical toothed arrangement geometry, but have a different number of flights.

**7.** Device as claimed in claim 5 or 6, **characterised in that** the screw portion which is provided between two screw portions with an at least approximately identical toothed arrangement geometry has a width at the tooth tip (k) and tooth base (z) which is 1.5 to 2.5 times as large, preferably twice as large.

**8.** Device as claimed in any one of claims 1 to 7, **characterised in that** the first screw portion forms the melting zone (S, E), the third screw portion forms the degassing zone (G) and the fifth screw portion forms the homogenization zone (P), oriented towards the discharge zone, of an extruder, and **in that** the second and fourth screw portions form sealing zones (D).


**Revendications**

**1.** Dispositif de façonnage de matériau par mélange et/ou plastification, avec au moins deux vis sans fin (2, 3) coniques, disposées l'une à côté de l'autre dans un carter de vis sans fin (1) commun, dont les pas de vis s'engrènent entre eux et sont entraînés en rotation autour de l'axe de vis sans fin (4, 5) respectif par au moins un moteur, dans le même sens de rotation, le matériau à façonner étant amené aux vis sans fin (2, 3) par au moins une ouverture d'alimentation (6), disposée dans la zone d'alimentation (E) d'une des extrémités frontales des vis sans fin (4, 5), du carter de vis sans fin (1) et le matériau façonné par les vis sans fin (2, 3) sortant du carter de vis sans fin (1) par au moins une ouverture de sortie (7), disposée dans la zone de distribution (A) de l'autre extrémité frontale des vis sans fin (2, 3), du carter de vis sans fin (1), **caractérisé en ce que** le rapport entre les mesures du diamètre extérieur de vis sans fin (c, d) et du recouvrement, donc de la surface de chevauchement des deux vis sans fin (2, 3), est compris entre un sur un et un sur deux aussi bien dans la zone d'alimentation (E) que dans la zone de distribution (A).

**2.** Dispositif selon la revendication 1, **caractérisé en ce que** le rapport entre la hauteur de recouvrement (a) maximale correspondant au moins approximativement à la profondeur de pas de vis d'une vis sans fin (2, 3) dans la zone de distribution et la hauteur de recouvrement (b) dans la zone d'alimentation est compris entre un sur un et un sur quatre.

**3.** Dispositif selon la revendication 1 ou 2, **caractérisé en ce que** le rapport entre le diamètre extérieur de vis sans fin (c) dans la zone de distribution et le diamètre extérieur de vis sans fin (d) dans la zone d'alimentation est compris entre un sur un et un sur quatre.

**4.** Dispositif selon l'une des revendications 1 à 3, **caractérisé en ce que** le rapport entre le diamètre extérieur de vis sans fin (c) dans la zone de distribution et la longueur de vis sans fin (e) est compris entre un sur vingt et un sur cinquante.

**5.** Dispositif selon l'une des revendications 1 à 4, **caractérisé en ce que** les vis sans fin (2, 3) coniques comprennent, dans le sens longitudinal des vis sans fin, au moins trois, de préférence cinq, sections dont les sections se raccordant les unes aux autres présentent des dentures différentes.

**6.** Dispositif selon la revendication 5, **caractérisé en ce que** les sections de vis sans fin se raccordant les unes aux autres présentent une géométrie de denture au moins à peu près identique, mais présentant un nombre de pas différent.

**7.** Dispositif selon la revendication 5 ou 6, **caractérisé en ce que** la section de vis sans fin prévue entre deux sections de vis sans fin avec au moins approximativement la même géométrie de denture présente une largeur de pied de dent (z) et de sommet de dent (k), 1,5 à 2,5 fois, de préférence double.

**8.** Dispositif selon l'une des revendications 1 à 7, **caractérisé en ce que** la première section de vis sans fin forme la zone de fusion (S, E), la troisième section de vis sans fin forme la zone de dégazage (G), et la cinquième section de vis sans fin forme la zone d'homogénéisation (P) dirigée vers la zone de déchargement, d'une extrudeuse et **en ce que** la deuxième et la quatrième sections de vis sans fin forment des zones d'étanchéité (D).

*FIG.1*

## FIG.2

## FIG.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1529812 A1
- AT 503371 A
- US 3288077 A
- US 4247206 A